# EUROPEAN PATENT SPECIFICATION

(11) **EP 4 108 820 B1**
(45) Date of publication and mention of the grant of the patent: **05.03.2025**
(21) Application number: 21180620.3
(22) Date of filing: 21.06.2021
(51) Int. Cl.: D04H 3/009, B65D 33/00, B65D 81/24, D04H 3/016, D04H 3/11

(54) **FOOD BAG FROM NONWOVEN MADE FROM MULTICOMPONENT FILAMENTS**
NAHRUNGSMITTELBEUTEL AUS VLIESSTOFF AUS MEHRKOMPONENTENFILAMENTEN
SAC ALIMENTAIRE NON-TISSÉ FABRIQUÉ À PARTIR DE FILAMENTS MULTICOMPOSANTS

(43) Date of publication of application: 28.12.2022
(73) Proprietor: Carl Freudenberg KG, 69469 Weinheim (DE)
(72) Inventor: Kamin Schulz, Elisabeth, 67661 Kaiserslautern (DE); Rutsch, Peter, 69518 Abtsteinach (DE); Kerhault, Jean-Francois, 67661 Kaiserslautern (DE)
(74) Representative: Banse & Steglich Patentanwälte PartmbB

(56) References cited:
- JP-A- H10 127 185
- US-A1- 2018 057 984

## Description

The invention relates to a food bag for storing vegetables, wherein the walls of the food bag are based on a nonwoven which consists of multicomponent filaments, which are split at least partially into elementary filaments. The invention is also directed to uses and methods related to the food bag.

### State of the art

Most vegetables which are stored at room temperature or cool temperature remain fresh and edible only for a relatively short time. Some vegetables, such as carrots or apples, can also be stored for weeks or even months under optimal conditions. However, for most consumers or small professionals, for example in gastronomy, it is often not possible to adjust to store vegetables under optimal or even appropriate conditions. Many consumers or professionals have limited storage facilities or limited access to fresh vegetables. Consumers or small professionals usually store vegetables at room temperature, in the fridge or cellar. After some time, typically a few days or weeks, the consistency can undesirably change, for example by wilting, molding, shrinking, drying, moistening or softening. This has the effect that the vegetables are not attractive any more, the taste can be impaired, or the vegetables are not edible any more. There is a general and strong desire to prevent vegetable spoilage and resulting waste for economic, ecologic and health reasons.

Vegetable spoilage is in part an inherent result of biochemical procedures, in which carbohydrates, proteins or fats are continuously degraded. These processes may be slowed down by optimal storage conditions. Relevant factors for optimal storage comprise humidity and temperature, but also gas exchange and balance with the environment.

In order to reduce spoiling, stored vegetables can be packed, for example in containers, plastic foil or paper bags. Such packaging materials shall reduce loss of moisture and prevent drying. On the other hand, such materials have limited permeability for gas or moisture, which can have negative effects. For example, condensed water can accumulate in plastic packagings, which can lead to vegetable softening and molding. Lack of oxygen can lead to anaerobic reactions, whereas an excess of carbon dioxide can lead to acidification in the food.

It is another general disadvantage of standard packagings that they are discarded after use. Typically, packagings from plastic foil or paper bags cannot be reused and become waste or at best recycled. The high amounts of packagings required lead to environmental problems, but also to an economic burden for production, recycling and waste management.

There is a strong and ongoing need for improvements in vegetable storage, which overcome the above mentioned problems. It would be highly desirable to provide means for increasing the storage time of vegetables and for reducing waste. Specifically, it would be desirable to provide packaging materials, which keep vegetables fresh and edible for long time periods and prevent spoiling and other undesired effects.

Nonwovens from split multicomponent filaments are known in the art. They are available under the trademark Evolon from Freudenberg, DE, for various applications, such as bedding, wipes or hygiene articles. Such nonwovens and methods for their production are described for example in EP 3 165 655 B1 or DE 10 2004 036 099 A1.

EP 3 287 555 A1 relates to technical packaging materials based on multi-component filaments which are split into elementary filaments. The nonwovens have a high mechanical strength which render them suitable for applications under stress. The nonwovens can be used as protective surface layers of technical packaging materials, for example in transportation. Due to the porous nonwoven structure, the nonwoven materials are also breathable and allow exchange of gas or steam. Applications of the nonwovens for storing food are not disclosed or suggested.

JPH10127185A relates to a fruit bag from nonwoven fabric obtained from split bicomponent filaments. The fruit bag is used in agriculture for covering growing fruits and protecting them from insects, birds and direct sunlight.

### Problem of the invention

The problem of the invention is to provide means for storing vegetables which overcome the above mentioned problems. The means should keep the vegetables fresh or at least edible for as long as possible. They should prevent spoiling and undesirable changes of consistency. It is a further problem to provide means for storing vegetables which avoid or reduce waste. The means should be especially for consumers and professionals which regularly store limited amounts of food, such as in gastronomy. The means shall be suitable for different types of vegetables. Preferably, the means shall be easily available, reusable and convenient to use; and thus suitable for storing vegetables in daily routine and without special skills.

### Disclosure of the invention

Surprisingly, the problem underlying the invention is solved by food bags and uses according to the claims. Further embodiments are outlined in the description.

Subject of the invention is a food bag for storing vegetables, wherein the walls of the food bag comprise a nonwoven which consists of multicomponent filaments, which are split at least partially into elementary filaments, wherein at least a portion of the nonwoven is perforated.

As used herein, a "food bag" is a bag for storing food which comprises side walls, an interior in which the food is enclosed, and an opening through which the food is put in and taken out. Typically, the sidewalls are non-rigid, soft and flexible. The food bag has preferably a relatively simple structure, such as a sachet, sack or pouch. The food bag may comprise a label and closing means, such as a grip or drawstring.

Vegetables are parts of plants, which can be consumed by humans or other animals as food. The vegetables are preferably fresh and/or in their natural state. Typically, the vegetables are raw. Thus, they are not processed by cooking or other harsh methods which would significantly alter the structure. The vegetables are not a processed dish or the like.

As used herein, "storing" means that the vegetables shall be kept as they are for subsequent consumption or use. Accordingly, the vegetables are not purposefully processed during storing, for example by heating or steam. During storing, the original structure, consistency and integrity of the vegetables should be maintained as much as possible and for as long as possible.

Preferably, the vegetables are stored at above 1 °C and/or are not heated to a temperature above room temperature (25 °C). Preferably, the vegetables are stored between 1 °C and 30 °C, for example in a fridge or cellar. The vegetables are not frozen during storing. Thus, they are not stored in a freezer. It was found that the food bag is especially suited for keeping vegetables fresh at cool to ambient temperatures.

The nonwoven consists of multicomponent filaments, which are split at least partially into elementary filaments. The nonwoven is a nonwoven fabric or sheet. By definition, the fibers are bonded by friction, adhesion and/or cohesion. Typically, the nonwoven fibers have random orientation. Preferably, the nonwoven is a textile product as defined in ISO 9092:1988.

Preferably, the food bag and/or the food bag walls do not comprise a further, additional nonwoven, which does not comprise split multicomponent filaments. It is advantageous that the food bag can be manufactured in a simple manner, because only one type of textile fabric, which is the nonwoven, is required for its production.

Preferably, the multicomponent filaments are produced by melt-spinning, wherein thermoplastic polymers are molten and spun from the melt. Preferably, the nonwoven is a spunbond nonwoven. Spunbond nonwovens are formed from continuous fibers, which are spun from a polymer melt and drawn, laid to a nonwoven precursor (felt), and bonded to each other to form the nonwoven fabric. In the spinning process, continuous filaments are obtained, also referred to as endless filaments (in contrast to staple fibers of defined). Spunbond nonwovens from continuous filaments are preferred, because they are relatively stable, do not exhibit significant particle loss and have a relatively smooth surface. Especially spunbond nonwovens from finely split multicomponent filaments are relatively soft and elastic and can be conveniently used for packing and storing vegetables. The fibers used in the inventive nonwoven are preferably continuous filaments. Herein, the terms fiber and filament are used as synonyms.

The nonwoven is obtained from multicomponent filaments which are splittable. They are split at least in part into elementary filaments (monofilaments). Splittable multicomponent filaments consist of at least two different elementary filaments, which are aligned to each other in parallel. They have a phase interphase between each other and are adhered to each other in a splittable manner along the filament length. The adhesive forces are relatively loose.

Typically, the multicomponent filaments are split mechanically. In a preferred embodiment, the multicomponent filaments are split by fluid jet treatment (hydroentangling). Such treatment is advantageous, because it bonds the fibers and consolidates the nonwoven at the same time. Typically, the fluid is water. Hydroentangled nonwovens are characterized by microregions, in which the multicomponent filaments are split only partially or not at all. The ratio of split filaments can be increased by hydroentangling time and/or energy. When applying a sufficiently long and/or energetic fluid jet treatment, spun nonwovens are obtainable which consist almost exclusively of elementary filaments. Preferably, at least 60%, especially at least 80%, at least 90% or at least 95% of all filaments in the nonwoven are split elementary filaments, based on the total weight of the filaments. The ratio of split filaments can be determined by microscopic analysis of multiple randomly chosen areas of the nonwoven. During splitting into elementary filaments, generally a much closer entangling of the single filaments is obtained, when compared to respective nonwovens from monofilaments having the same titer. Overall, nonwovens from split multicomponent filaments have a defined and unique structure which confers advantageous properties to the food bag.

In a preferred embodiment, the nonwoven has a basis weight (base weight, area weight) of 50 to 110 g/m², preferably from 60 to 100 g/m², more preferably from 60 to 100 g/m². In a preferred embodiment, the nonwoven has a basis weight of 60 to 90 g/m², or 70 to 90 g/m², most preferably about 80 g/m². Preferably, the basis weight is at least 60 g/m² or at least 70 g/m². This is advantageous, because sufficient mechanical stability and density is adjusted. Preferably, the basis weight is not more than 100 g/m², or especially not more than 90 g/m². It was found that the performance of nonwovens having a higher base weight can be decreased at least for some vegetables stored. Without being bound to theory, such a nonwoven could be too dense for achieving an optimal balance between humidity and gas exchange.

At least a portion of the nonwoven is perforated. Surprisingly, it was found that the performance of the food bag can be improved for many application, if the nonwoven comprises perforations. Without being bound to theory, it may be advantageous if the fine elementary filaments control humidity, whereas the perforations enable gas exchange. The term "perforation" refers to voids, which are purposefully introduced into the nonwoven. They have the form of channels, which traverse the nonwoven from one surface to the other. The channels have roughly a cylindrical structure, although the side walls are typically uneven. Thus, the perforations are different from the inherent pores between the fibers in the nonwoven structure. For example, the average pore size of the perforations could be at least 5- or at least 10-fold higher than the average and/or maximum pore size of the nonwoven.

In a preferred embodiment, the nonwoven which is not perforated (or before perforations are introduced, or in the sections which are not perforated) has an average pore size of 5 µm to 50 µm, preferably 10 µm to 40 µm, and/or a maximum pore size of 10 µm to 100 µm, preferably 15 µm to 60 µm, preferably at a basis weight of 60 g/m² or 100 g/m², as determined with a pore size measuring device PSM 165 of company TOPAS, DE, preferably according to the provisions of the producer and/or ASTM E1294-89 or ASTM F-316-03.

Preferably, the average pore size of perforations in the nonwoven is between 100 µm and 5 mm, preferable between 150 µm and 2 mm, or more preferably between 200 µm and 1 mm. Preferably, the maximum diameter of the perforations in the nonwoven is at least 500 µm or at least 1 mm. Preferably, the maximum pore size of the perforations is between 200 µm and 10 mm, preferable between 500 µm and 6 mm, or more preferably between 1 mm and 5 mm, wherein the pore sizes are determined as above.

Preferably, all perforations have approximately the same size and/or shape, and/or are introduced by the same method and/or device. They can be introduced by methods such as punching, stamping or needling. Preferably, the nonwoven is perforated in a regular pattern and/or the perforations are equidistant to each other. The diameter of the perforations can be determined by microscopic analysis. In practice, perforations in the mm range which are introduced by the same means differ in size and shape, because the local resilience of the nonwoven structure and fibers can vary throughout the interior.

Preferably, the air permeability of the nonwoven is between 20 and 5,000 l/m²/s, more preferably between 50 and 2,000 l/m²/s, which can be determined according to EN ISO 9237:1995 at 100 Pa or at 200 Pa. Such an air permeability is relatively high, and seems to allow transfer of gases and moisture between the interior and environment. Typically, a perforated nonwoven has a relatively high air permeability, which is preferably at least 150, more preferably at least 250, or at least 400 l/m²/s. This can be advantageous, because the exchange of gases and moisture with the environment during storage is relatively high, whereas the fine fibers can adjust humidity in an advantageous range.

In general, elementary filaments from split multicomponent filaments have cross-sections which are not round, but have edges and irregular structures. This is advantageous, because irregularly shaped elementary filaments have relatively low mobility towards each other. In an especially preferred embodiment, the multicomponent filaments, especially bicomponent filaments, have a so called pie structure (PIE structure, orange structure). Pie structures are advantageous, because they can be split relatively easily. Bicomponent filaments with pie cross-section are split into elementary filaments having a pie or wedge-like structure, which increases the internal stability of the nonwoven.

The multicomponent filaments can be formed from 8 to 64 elementary filaments. With known methods, bicomponent filaments having for example 8, 16, 24, 32, 48 or 64 segments are obtainable. Upon splitting, the multicomponent filaments fall apart into the respective number of elementary filaments (mono-filaments). The term "pie" describes the cross-section shape of the elementary filaments only approximately. Preferably, the bicomponent filaments have the same number of each elementary filament (for example, 8 elementary filaments of each type in a PIE16 bicomponent filament). The bicomponent filaments preferably comprise alternating mono-filaments. Also preferred are hollow-pie structures, which comprise a hollow space in axial direction.

In a preferred embodiment, the elementary filaments have a titer from 0.02 to 0.5 dtex, preferably from 0.03 to 0.3 dtex. It is especially preferred that the titer is between 0.03 dtex and 0.2 dtex. This implies that basically all elementary filaments should have such titers. For example, elementary filaments having such low titers can be obtained by known methods from bicomponent filaments of type PIE 16 and PIE32. For example, PIE 16 elementary filaments can have a titer of about 0.08 dtex to about 0.2 dtex, whereas elementary filaments from PIE 32 can have titers from 0.02 to 0.07. In a preferred embodiment, the nonwoven comprises PIE 16 and PIE 32 bicomponent filaments.

Surprisingly, it was found a food bag comprising such fine filaments can have an especially good performance. As used herein, "performance" is the capability to keep vegetables fresh and edible for as long as possible upon storing in the food bag. Without being bound to theory, it may be speculated that the characteristic internal nonwoven structure with the fine filaments and inherent high density can advantageously regulate and balance humidity and gas exchange. In addition, the fine elementary filaments can confer high elasticity, softness and mechanical stability to the food bag, which renders packaging and handling convenient.

In a preferred embodiment, the nonwoven comprises at least two different types of multicomponent filaments, the elementary filaments of which have different average fiber titers. In a preferred embodiment, the nonwoven comprises multicomponent filaments with 16 to 32 elementary filaments. Especially preferred are nonwovens from bicomponent filaments in pie form from 16 segments, which can have a fiber titer of 0.05 to 4 dtex, and/or from 32 segments, which can have a fiber titer of 0.02 to 0.08 dtex. It was found that a nonwoven from such a spun nonwoven can have an especially good food storage performance.

Preferably, the multicomponent filaments comprise two, three or more different polymer components. From each component, a defined elementary filament type is obtained by splitting. The nonwoven thus comprises at least two types of elementary filaments which are different from each other. Probably, the elementary filament types comprise different types of polymers. The elementary filament types may also comprise different titers. Preferably, the titer difference of the components is at least 0.02 dtex. By combining relatively fine and slightly thicker elementary filaments in a spun nonwoven, a higher performance may be achieved. Preferably, the amount of each elementary filament type in the multicomponent filaments are identical. Preferably, the multicomponent filaments comprise two or three different components. Especially preferred are bicomponent filaments. In this regard, it is advantageous that a high splittability can be achieved, whereby the material has a relatively simple structure.

Preferably, the fiber forming polymers are thermoplastic. Preferably, they are selected from polyester, polyamide, polyolefin and/or polyurethane. Especially preferred are bicomponent filaments having a polyester component and a polyamide component. In a preferred embodiment, the bicomponent filaments comprise alternating elementary filaments from polyamide and polyester.

It is preferred that the mono-component filaments are split as much as possible. Thereby, the homogeneity and fineness of the nonwoven can be increased, thereby increasing the performance. In order to achieve a high splittability, it is advantageous that at least two elementary filaments comprise different thermoplastic polymers, which are preferably incompatible. Incompatible polymers in combination result in pairs of filaments which have no or only low adhesive bonding towards each other. As incompatible polymer pairs, preferably polyester, polyamide, polyolefin and/or polyurethane are used. Polymer pairs with a polyamide and a polyester, especially polyethylene terephthalate (PET), are especially preferred due to their low adhesiveness. Polymer pairs comprising at least one polyolefin are also preferred due to low adhesiveness. Especially preferred are combinations of one polyester, especially PET, polylactic acid and/or polybutylene terephthalate, with a polyamide (PA), especially polyamide 6, polyamide 66 or polyamide 46, if desired in combination with one or more of the above components, preferably polyolefins. Especially preferred is a combination of PET and polyamide 6, PET and polyamide 66. Further preferred are polymer pairs, which comprise at least one polyolefin, especially in combination with at least one polyester or polyamide. Preferred are thereby especially polyamide 6/polyethylene, PET/polyethylene, polypropylene/polyethylene, polyamide 6/polypropylene or PET/polypropylene. These combinations have relatively high splittability. In a preferred embodiment, the volume, length and/or weight ratio of the first to second elementary filaments is between 90:10 and 10:90, especially between 80:20 and 20:80.

The polymers are the fiber raw material of the filaments (the fiber forming component). The filaments may comprise conventional additives. The additives are not fiber raw materials, and typically not organic polymers. Additives can be added to the fiber polymers in order to modify their properties or improve workability. Suitable additives can be, for example, dies, fillers, antistatic agents, antimicrobial agents, such as copper, hydrophilic or hydrophobic modifiers or the like. For example, they can be present in an amount of up to 10 wt.%, preferably up to 5 wt.% or up to 2 wt.%, especially between 150 ppm and 10 wt.%, based on the total weight of the filaments.

Methods for producing suitable multicomponent filaments, which can be split into elementary filaments, are known in the art. The production of such filaments and nonwovens is described, for example, in EP 3 165 655 B1, FR 2 749 860 A, DE 10 2014 002 232 A1. The nonwovens can be produced, for example, with a spinning device of the trademark REICOFIL 4 (Reifenhäuser, DE). In the following, suitable methods for producing nonwovens which can be used in the invention are described. In contrast, bicomponent filaments of core/sheath type are generally not splittable. They are typically used for adhesively bonding the bicomponent filaments to each other through the molten sheath component.

The nonwoven can be subjected to mechanical treatment, in which the multicomponent filaments are split at least partially into the elementary filaments. Preferably, the nonwoven is simultaneously consolidated thereby. Preferred is a fluid jet treatment (hydroentangling, hydroentanglement, water jet needling), in which a fluid, such as a liquid or gas, operates under pressure on the nonwoven. Especially preferred is water, because it is inexpensive and available in high amounts, and the nonwovens can be dried rapidly and without undesired residues. The filaments are split and admixed, thereby forming an intimate composite through friction and fiber locking. Thereby, a homogenous spunbond nonwoven can be obtained having high softness and elasticity. The nonwoven can be subjected to common post-treatments, such as drying and/or shrinking.

In a preferred embodiment, the nonwoven is consolidated (bonded) only by hydroentangling (fluid jet treatment). It was found that this is sufficient and that no additional bonding is required, such as thermal bonding, chemical bonding or needle-punching. It was found that hydroentangling alone can confer high stability to the nonwoven, but also advantageous properties for food storage, which may relate to gas exchange and humidity control.

In another embodiment, the nonwoven hydroentangled and bonded by at least one additional method. For example, the additional bonding can be mechanical consolidation by calandering or needling (needle-punching). The calendering is preferably carried out at sufficiently low temperature, such that no thermal consolidation due to molten fibers occurs. In another embodiment, the nonwoven is also thermally consolidated, especially in partial regions. A local consolidation in partial regions can improve stability. For example, partial consolidation can be provided by ultrasonic treatment and/or calendering in a spot pattern. However, in order to preserve the advantageous properties of the nonwoven for food storing, only a minor portion of the total area should be consolidated in this manner, such that less than 10% or less or 5%.

Preferably, the nonwoven fibers are not covalently attached to each other, especially not over the entire area. Preferably, the fibers are not chemically or thermally bonded. Covalent bonding can render the nonwoven more rigid and less permeable, which can reduce the food storage performance. Further, chemical binder or residues thereof can be released and contaminate the food.

Preferably, the food bag wall consists of the nonwoven which comprises the split elementary filaments. Preferably, the nonwoven is a single layer of the nonwoven. This is advantageous, because it is not required to laminate several layers, which would render the production more complicated and costly. Thus, the nonwoven is preferably not a laminate from two or more preformed nonwoven layers bonded to each other.

In a less preferred embodiment, the nonwoven is a laminate from two or more nonwoven layers. In another embodiment, the food bag comprises at least one additional layer, which is not a nonwoven. For example, the other layer could be a woven layer, which is a cover layer for increasing the stability. In a preferred embodiment, the food bag does not comprise an additional layer, apart from the nonwoven itself. This is advantageous, because a simple food bag can be provided from only a low number of components. It was found that such a simple food bag does not only have high performance, but also high mechanical stability. The food bag may comprise other parts connected to the walls, such as a label, grip or handle, or fastening means.

In a preferred embodiment, the walls of the food bag comprise two or more different portions, which are formed from two or more different types of the nonwoven from split multicomponent filaments. This can be advantageous because each section can confer specific properties to the food bag. In these embodiments, it is preferred for convenient manufacturing that one type of nonwoven forms the front wall, whereas the second type forms the back wall. The term "portion" refers to different sections of the food bag walls, which are connected to each other by sewing, adhesive bonding or the like. In contrast, the "portions" are not stacked layers.

In a preferred embodiment, the walls of the food bag comprise at least two portions, wherein a first portion is perforated a second portion is not perforated. Thus, the perforated portion can enable exchange of moisture and gas between the interior and environment. The portion without perforations can be printed with a label or decoration. It is also conceivable to combine two nonwovens having different base weights, such that the denser nonwoven can bind moisture, whereas the lighter nonwoven mediates gas and moisture exchange. In a preferred embodiment, a first portion is non-perforated and comprises a label, whereas a second portion is perforated. A label is advantageous, because different vegetables can be stored in several food bags without a danger of confusion, and without the need to open the food bags for identifying the vegetables. A printed label is more stable on a non-perforated nonwoven, whilst the perforated nonwoven portion without label can optimize the performance.

In a preferred embodiment, the food bag is washable and/or has been washed at least once, preferably at a temperature of at least 40°C. It is a special advantage of the inventive food bag that it is washable and can thus be repeatedly reused. Preferably, the washing is at elevated temperature, such as at least 40°C, preferably at least 60°C or at least 80°C. As used herein, the term "washing" refers to a textile treatment of a nonwoven fabric under mechanical agitation in the presence of water and optionally additives such as detergent or softener.

Preferably, the washing is a conventional textile cleaning treatment, preferably in a washing machine. Thereby, the food bag is soaked in aqueous washing liquid, which typically comprises a detergent, and is mechanically agitated, typically for at least 10 min or at least 30 min. Preferably, the washing is a standard washing treatment for textile fabrics according to DIN EN ISO 6330. It was found that the performance of the food bag is not decreased even by repeated washing. Preferably, the performance is not reduced after 10 household washing cycles according to DIN EN ISO 6330 at 40°C or 60°C. Preferably, the food bag is washed with detergent and/or chemical softener. This can be advantageous, because the drapability, water absorption or thickness can be increased. The washability is a great advantage of the food bag compared to conventional packaging materials, such as plastic foil or paper bags, which are discarded after use. Since the performance of the nonwoven is generally not reduced by washing, the food bag can be washed and reused repeatedly, for example more than ten times, more than twenty times or even more. It is evident that this is highly desirable for economic and environmental reasons; but also for health reasons, because impurities, germs or molds can be efficiently removed after use.

In a preferred embodiment, prior to the washing, the food bag and/or nonwoven fabrics could be jet softened. In such a process, textile fabrics are softened mechanically in overflow jet dyeing machine with optionally detergent. The method can increase the drapability, water absorption and thickness of the nonwoven fabric. A food bag with jet softened nonwoven side walls is advantageous, because it can maintain a high performance, whereas the high drape and softness are advantageous for handling and packing.

In a preferred embodiment, the nonwoven has a thickness of 0.1 mm to 1 mm, especially between 0.2 mm and 0.6 mm, determined according to DIN ISO 9073-2:1995, part 2, for normal nonwovens. Preferably, the nonwoven has a maximum tensile strength (maximum tensile force) in all directions of at least 200 N/5 cm, especially at least 250 N/5 cm, determined according to EN 13934-1. Preferably, the maximum elongation in all directions is 20% to 60%, determined according to DIN EN 13934-1.

In a preferred embodiment, the food bag has the following features:
- the nonwoven has a basis weight of 70 to 90 g/m²,
- at least a portion of the nonwoven is perforated,
- the elementary filaments have a titer from 0.03 to 0.3 dtex,
- the multicomponent filaments have a pie-shaped structure (PIE-structure), and
- the multicomponent filaments preferably comprise 16 to 32 elementary filaments.

Subject of the invention is also a food bag as described above, which contains at least one vegetable. It was found that the many types of vegetables can kept fresh and edible in the food bag. Undesirable changes, such as wilting, molding, shrinking, drying, moistening or softening, are typically delayed significantly. Preferably, the storage time (in which the vegetable is still edible) is improved for at least 10%, more preferably at least 20% or 50%, compared to storing without packaging. It was also found that the storage time may be improved compared to conventional packaging materials, such as plastic foil or paper bags.

Vegetables are parts of plants. Typically, they can be consumed by humans or other animals as food, but they also can be used for other applications. In a preferred embodiment, the vegetable is selected from flowers, fruits, stems, leaves, roots, tubers, mushroom and seeds. In a preferred embodiment, the vegetables are selected from leaf vegetables, such as corn lettuce, lettuce, baby leaf salads and aromatics, from Brassica crops, such as broccoli and cauliflower, from bulb vegetables, such as spring onion, from fruit vegetables, such as tomato and capsicum, from root vegetables, such as carrot or radish, and from fruits, such as grape, pear, apples or strawberries, from asparagus and from mushrooms. Preferably, the vegetables are selected from cauliflower, lettuce, tomato, fruit, especially strawberries, grapes or pears, carrots, radish, spring onion, broccoli, capsicum and rucola. The vegetables can also be aromatic plants. Typically, the vegetables are used after storage. Typically, they are eaten in raw form or after processing. The vegetables can also be used other purposes, such as pharmaceutical, medical or cosmetic uses, handicraft or gardening.

In a preferred embodiment, the dimensions of the food bag are not overly high, such that it is applicable for household use. Preferably, the maximum length of the sidewalls of the food bag is not more than 60 cm, preferably not more than 40 cm. Preferably, the minimum length of the sidewalls is at least 10 cm or at least 20 cm. The dimensions of all sidewalls are preferably in the range of 10 to 30 cm up to 40 to 60 cm. Preferably, the amount of vegetables, such as apples, which can be stored in the food bag is less than 5 kg, preferably less than 3 kg. In these embodiments, the food bag is for use by consumers or small professionals, and rather not a storing means for industrial or large-scale use. If the dimensions of the food bags would be too high, the vegetables in the food bag would become stacked, and the effect of gas and moisture control would become less pronounced. Preferably, the food bag is for use by consumers or small professionals, such as gastronomy or retail locations. Preferably, it is suitable for storing in a standard household fridge.

Subject of the invention is also the use of a food bag as described above for storing vegetables. The purpose is to maintain the vegetable as it is for prolonged time during storing. Thus, the food bag is not used as a tool, device or part thereof for processing vegetables, for example by heat, steam, cooking, radiation, sterilization, in a microwave or the like.

It is preferred that the food bag and/or nonwoven have a relatively simple structure. For example, it is not preferred that the nonwoven is combined with other, different textile fabrics. It is also not preferred that the food bag and/or nonwoven are modified with chemicals or active agents for preserving the food, such as active carbon. The advantages of the nonwoven lie in its structure, such that additional means and agents for food preservation are not required. However, if desired the nonwoven and/or food bag can be combined with such additional means for increasing the performance, such as additives, such as active carbon or antimicrobials. It is preferred to enclose the vegetables into the food bad without additional packaging means, such as plastic foil or the like. Preferably, the nonwoven is not electrostatically charged. Preferably, the nonwoven does not comprise meltblown fibers.

In general, the time period for which vegetables can be stored, and maintained relatively fresh and edible, can be increased with the food bag. The absolute storage time will depend on the vegetables, as some vegetables such as strawberries remain edible for only a few days, whereas other vegetables such as carrots or potatoes remain edible for weeks. In a preferred embodiment, the vegetables are stored for at least 1 day, at least 2 days or at least 7 days. In a preferred embodiment, the vegetables are stored for at least 12 hours and/or at a temperature between 1°C and 30°C.

Subject of the invention is also a method for storing vegetables, comprising the steps
a) providing a food bag as described above,
b) enclosing the vegetables in the food bag, and
c) storing the food bag with the enclosed vegetables.

In the method, "enclosing" basically means that the vegetables are put into the interior of the food bag through the opening. Preferably, the filled food bag is closed, for example by a string or fastening. This ensures that the desired balance of gases and humidity is maintained in the interior. the vegetables are taken out of the food bag after storing. Preferably, 100% of the vegetables are edible after storage.

### Working examples

### Materials

All food bags used in the following examples were prepared from spunbond nonwoven fabrics consisting of bicomponent filaments with 16 or 32 alternating elementary filaments of polyester (PET) and polyamide 6 (Freudenberg, DE; trademark Evolon). The titer of the elementary filaments was between 0.1 and 0.2 dtex (16 PIE) and about 0.05 dtex (32 PIE). The spun nonwovens were produced similarly as described in example 1 of EP 3 165655 B1. The bicomponent filaments were split and the nonwovens consolidated by water jet treatment. No additional bonding method was applied. The nonwoven fabrics of most food bags were subsequently subjected to jet softening. A summary of structure and properties of the materials is provided in table 1. The air permeability was determined according to DIN EN ISO 9237 at 100 Pa. The food bags were produced from the nonwovens by sewing. Some food bags were producing from different nonwovens from the front side and back side. Herein, the front side is the side on which a label was printed with a picture of a vegetable.

**Table 1: Summary of nonwoven types, structure and properties**

| Food bag | A* | B | C | D* | E* | F | G | H |
|---|---|---|---|---|---|---|---|---|
| Basis weight [g/m²] | 100 | front 80 | 100 | 100 | 80 | 80 | front 80 | 60 |
| | | back 80 | | | | | back 60 | |
| Fiber type front | PIE16 | PIE16/32 | PIE16/32 | PIE16 | PIE16/32 | PIE16/32 | PIE16/32 | PIE16 |
| Fiber type back | | PIE16 | | | | PIE16 | PIE16 | |
| Perforation | - | back side | back side | - | - | back side | back side | yes |
| hydroentangled | yes | yes | yes | no | yes | yes | yes | yes |
| needle punched | yes | | no | yes | no | | | no |
| softened | yes | front side | yes | yes | yes | front side | front side | no |
| washed | no | yes | no | no | yes | yes | yes | no |
| printed | yes | front side | no | no | no | front side | front side | no |

| | | | | | | | | |
|---|---|---|---|---|---|---|---|---|
| * comparative | | | | | | | | |

The air permeability of the non-perforated nonwoven of food bag type E is at 76.6 Pa [l/m²s]. The air permeability of the back side nonwoven of perforated food bag type B is 509 [l/m²s].

### Example 1: Cauliflower

Cauliflower was packed and stored in the food bag and for comparison also in unpacked form. The quality was examined visually at different time points. The results are summarized in table 2. The results demonstrate that the food bag can significantly increase the quality of stored cauliflower.

**Table 2: results of example 1 with cauliflower**

| storage time [days] | unpacked | food bag |
|---|---|---|
| 1 | No significant difference | |
| 4 | signs of dehydration, loss of crispness, but still edible | almost no signs of ageing |
| 11 | very limp and soft borderline in terms of on edibility | first signs of ageing, similar to unpackaged after 4 days in any case still edible |
| 14 | very limp and soft no longer edible | signs of ageing, slightly worse than unpacked after 4 days in any case still edible |

### Example 2: Lettuce

Lettuce was packed in the food bag and in PET foil for comparison and stored in the refrigerator. The quality was examined visually after different time points at 1, 2, 5 and 7 days. The lettuce stored in the food bag showed significantly less rotting than the lettuce stored in the PET foil. The results demonstrate that the food bag can significantly increase the quality of stored lettuce.

### Example 3: Tomato

Tomatoes were packed and stored in food bag type A (comparative) and in unpacked form for comparison. The quality was examined visually after 12 days. The tomatoes in the food bag were still firm and hard after 12 days. In contrast, the unpacked tomatoes were completely limp and soft after 12 days. The results demonstrate that the food bag can significantly increase the quality of stored tomato.

### Example 4: fruit

Strawberries, grapes and pears were packed and stored in food bags type B with perforations in the back side. The strawberries were harvested at the same day. As controls, strawberries in the original PET basket/foil packaging, grapes in the original paper bag packaging and pears without packaging were stored for the same time. The strawberries and pears were stored at room temperature and the grapes were stored in the fridge. All tests were repeated once. The quality was examined visually and the weight of the vegetables (without packing) was compared before and after storing. The results are summarized in table 3. For strawberries, it can be concluded that the food bag clearly improves quality (although the storage time should be less than 4 days). In addition, the weight loss of pears after 18 days was -11% without packaging versus -7% when stored in the food bag. The results demonstrate that the food bag comprising nonwovens with perforations can significantly increase the quality of stored fruit.

**Table 3: results of example 4 with fruit**

| Fruit | time [days] | comparison (original or no packaging) | food bag |
|---|---|---|---|
| strawberries | 4 | soft, molded, rotted not edible | Better quality than with original packaging, 40% still edible |
| grapes | 13 | | Results seem to be better than with original packaged |
| pears | 4 | 50% edible (pear is dumb) | same dehydration, but 100% edible |

### Examples 5 to 7:

Carrot, radish and spring onion were stored in food bags from nonwoven fabrics C, D or E. For comparison, the vegetables were also stored without packaging, in a cotton bag or closed plastic box. The vegetables were carrot (same lot, same harvest day, same bag), radish (same lot, same harvest day, same bundle) and spring onion (same lot, same harvest day, same bundle). Storing was in the domestic fridge in the vegetable compartment, one repetition per sample. The weight of the bags and of the vegetables was measured at 0, 3, 7, 10, 18 and 25 days. Pictures for visual examination were taken at the same time points of the same marked spot of the vegetable. The rating is a visual and tactile evaluation: 5 = very fresh, 3 still consumable, <3 no longer consumable. The results are summarized in the following.

### Example 5: carrots

The results for carrots are summarized in table 4 below. The results demonstrate that carrots stored in the inventive food bags had higher quality and could be preserved longer than without packaging. Quality and weight loss was comparable to carrots stored in cotton bags. However, it is a great advantage that the food bag remained dry even after prolonged storing time, whereas the cotton bag becomes very wet. Wet packaging material promotes molding and is thus not suitable for food storage. Similarly, the closed plastic box could preserve the carrots in a fresh state, but accumulation of condensation water was observed which promotes molding. From the food bags, type E had the best performance with regard to vegetable quality. Without being bound to theory, it can be assumed that the performance of type C may be lower because of the relatively high base weight in combination with highly fine fibers, which could render the material too dense for optimal exchange of moisture and gases. Comparative type D is less suitable than comparative type E, presumably because the fibers were not split into fine elementary filaments.

**Table 4: results of example 5 with carrot**

| | | Storage means | | | | | |
|---|---|---|---|---|---|---|---|
| t [days] | parameter | food bag C | food bag D | food bag E | none | cotton bag | box |
| 0 | rating | 5 | 5 | 5 | 5 | 5 | 5 |
| 3 | | 5 | 5 | 5 | 5 | 5 | 5 |
| 7 | | 4 | 4 | 5 | 4 | 4 | 5 |
| 10 | | 3 | 3 | 4 | 3 | 3 | 5 |
| 18 | | 2 | 2 | 3 | 1 | 2 | 4 |
| 25 | | 2 | 2 | 3 | 0 | 1 | 4 |
| 18 | observation carrot | floppy | floppy | consumable | floppy | floppy | fresh some molds |
| 18 | observation bag | dry | dry | dry | dry | very wet | high condensation |

### Example 6: spring onion

With spring onion, the performance of all packing materials was significantly better than without packaging (data not shown). The best results from a quantitative perspective (rating) and qualitative perspective (weight loss) were observed with the inventive food bag type C and comparative type E. The performance of comparative type D was not as good as of the other food bags.

### Example 7: radish

With radish, the best results from a quantitative (weight loss) and qualitative (rating) perspective were observed with inventive food bag type C (data not shown). The performance of comparative type E was less good. The performance of comparative type D was low and worse than of the control without packaging. Food bags C (inventive) and E (comparative) performed better than the cotton bag comparison.

### Examples 8 to 10

Spring onion, broccoli and capsicum were stored in food bags from nonwoven fabrics B, E, F, G or H. From these, the nonwoven fabrics of B, F, G and H comprise perforations. For comparison, the vegetables were also stored without packaging. The tested vegetables were spring onion (same lot, same harvest day, same bundle), broccoli and capsicum (same lot, same harvest day, same bundle). Storing was in the domestic fridge in the vegetable compartment, one repetition per sample. The weight of the vegetables was measured after 0, 3, 7, 9 and 14 days. Pictures for visual examination were taken at the same time points of the same marked spot of the vegetable. The rating is a visual and tactile evaluation: 5 = very fresh, 3 still consumable, <3 no longer consumable. The results are summarized in the following.

### Example 8: spring onion

The results with spring onions demonstrated that from a quantitative point of view, as determined by weight loss, all food bags were better than the non-packaged control (data not shown). In this case, no significant difference was observed between different types of food bags. The best results regarding quality, as determined by rating, were obtained with food bag type B.

### Example 9: broccoli

The results with broccoli are summarized in table 5. The best results regarding quality, as determined by rating, were obtained with food bag G with perforations and type E, followed by type B. The best results for dehydration (quantity) were observed with food bag type B, followed by type F and G, all with perforations.

**Table 5: Results of example 9 with broccoli**

| nonwoven type | wt loss [%] | comment | wt loss [%] | rating [1 to 5] | comment | edible [%] |
|---|---|---|---|---|---|---|
| | day = 3 | | day = 7 | | | |
| B | -2.3 | | -5.6 | 3 | soft, slight molding, brownish | 96.1 |
| E | -5.2 | | -11.7 | 4 | firm and fresh, but slightly brown | 98.5 |
| F | -2.5 | | -8.2 | 2.5 | soft, brown, slight yellow, molding | 96.4 |
| G | -3.3 | | -7.7 | 4 | fresh, firm, but brown and yellow (opening) | 96.6 |
| H | -3.8 | molding | -10.4 | 1 | soft, yellow, brown, molding, opening | 74.2 |
| con | -3.6 | molding | -8.6 | 2 | soft, brown, molding | 74.3 |

### Example 10: capsicum

For capsicum, from a quantitative point of view, based on weight loss, the best results were obtained with food bag type F with perforations, whilst worse results were obtained with type E. From a qualitative point of view (rating), the results were similar for all food bags (data not shown).

### Examples 11: rucola

Rucola (same lot, same harvest day, same box) was stored in food bags from nonwoven fabrics B or E. For comparison, the rucola was also stored in the perforated plastic box in which it was purchased. Storing was in the domestic fridge in the vegetable compartment, one repetition per sample. The weight of the bag and of the vegetables was measured after 0, 3, 7, 9 and 14 days. Pictures for visual examination were taken at the same time points of the same marked spot of the vegetable. The rating is a visual and tactile evaluation: 5 = very fresh, 3 still consumable, <3 no longer consumable. After 3 days, the comparative sample was very wet, as humidity gathered on bottom of plastic bowl. Because of the high moisture and potential molding, the rucola could not be stored for a long time. The sample stored in food bag type E had wilted leaves. The sample in type B looked better and fresh. At the end of the trial, the edible rate of the rucola stored in type B was 75%. In contrast, the edible rate with the comparative plastic box and type E was 0%, respectively. Although the lowest weight loss was observed for rucola stored in food bag type E, the rating and assessment of edibility are clearly the relevant criteria for food bag performance. Overall, the food bag B with perforations is most suitable for storing the vegetable.

### Example 12: lettuce

Lettuce (*Batavia,* same harvest day) was packed in food bags B, F, G and E, and a control without packaging. All samples were stored in the vegetables compartment of a domestic fridge (one repetition with all samples). The weight of the vegetables without the bag was measured and pictures were taken at t=0; t=3; t=7 and t=9 days. At the end (t=9) all non-edible parts of the lettuces were eliminated to measure only the edible parts (edible rate). Ratings were made at a scale from 5= best to 1 = worse. The results are summarized in table 6. The results demonstrate that all food bags can maintain stored lettuce fresh and edible for longer time periods than without packaging. Food bag B had the best performance from the quantitative and qualitative assessment. The results suggest that perforations can significantly improve the performance.

**Table 6: Results of example 12 with lettuce**

| Product | food bag B | food bag F | food bag G | CONTROL without packaging | food bag E |
|---|---|---|---|---|---|
| weight loss t=3 | -4.63 | -8.88 | -9.54 | -10.63 | -8.79 |
| comments t=3 | slightly faded, fresh | faded (+), soft outer leaves | faded, soft outer leaves | very faded (++), soft, marginal necrosis | faded (+), soft outer leaves |
| rating t=3 | 5 | 3 | 4 | 1 | 3 |
| weight loss at t=7 in % | -8.76 | -18.07 | -17.06 | -20.09 | -16.29 |
| rating t=7 | 5 | 3 | 5 | 1 | 3 |
| comments t=7 | faded +, soft, yellowing | very faded (++), soft | faded + | very faded (+++), marginal necrosis | very faded (++), soft |
| weight loss t=9 | -13.80 | -22.72 | -22.36 | -25.34 | -21.57 |
| comments t=9 | faded, external leaves yellowish but still firm | very faded (++), soft, outer leaves burned | faded (+), outer leaves burned | very faded (++), yellowish, marginal necrosis | faded (+), soft, no yellowing |
| rating t=9 | 5 | 2 | 3 | 1 | 3 |
| edible rate [%] t=9 | 73.81 | 28.01 | 34.59 | 29.20 | 41.59 |

### Conclusion

It could be demonstrated in working examples that the food bags can improve the life time of stored vegetables, including:
- Leaf vegetables [corn lettuce, lettuce, baby leaf salads (example of rucola), aromatics (data not shown)]
- *Brassica* crops (Broccoli, cauliflower)
- Bulb vegetables (spring onion)
- Stem vegetables [Asparagus, leak (data not shown)]
- Fruit vegetables (tomato, *Capsicum*)
- Root vegetables (carrot, radish)
- Fruits [grape, pear, apple (data not shown)]
- others: mushroom (data not shown)

Overall, the results of the working examples demonstrate that the food bags can significantly improve the quality of the stored vegetables. The performance can be improved by perforations in nonwoven side walls.

## Claims

1. A food bag for storing vegetables, wherein the walls of the food bag comprise a nonwoven which consists of multicomponent filaments, which are split at least partially into elementary filaments, wherein at least a portion of the nonwoven is perforated.

2. The food bag according to claim 1, wherein the multicomponent filaments are split by fluid jet treatment.

3. The food bag according to at least one of the preceding claims, wherein the nonwoven has a basis weight of 50 to 110 g/m², preferably from 60 to 90 g/m².

4. The food bag according to at least one of the preceding claims, wherein the elementary filaments have a titer from 0.02 to 0.5 dtex, preferably from 0.03 to 0.3 dtex.

5. The food bag according to at least one of the preceding claims, wherein the multicomponent filaments have a pie-shaped structure (PIE-structure).

6. The food bag according to claim 5, wherein the multicomponent filaments comprise 16 to 32 elementary filaments.

7. The food bag according to claim 5 or 6, wherein the bicomponent filaments comprise alternating elementary filaments from polyamide and polyester.

8. The food bag according to at least one of the preceding claims, wherein the walls of the food bag comprise at least two portions, wherein a first portion is perforated a second portion is not perforated.

9. The food bag according to at least one of the preceding claims, which contains at least one vegetable.

10. The food bag according to at least one of the preceding claims, wherein the vegetable is selected from flowers, fruits, stems, leaves, roots and seeds.

11. Use of a food bag according to at least one of the preceding claims for storing vegetables.

12. The use of claim 11, wherein the vegetables are stored for at least 12 hours and/or at a temperature between 1°C and 30°C.

13. A method for storing vegetables, comprising the steps
a) providing a food bag of any of the preceding claims,
b) enclosing the vegetables in the food bag, and
c) storing the food bag with the enclosed vegetables at a temperature between 1°C and 30°C for at least 12 hours.

## Patentansprüche

1. Lebensmittelbeutel zur Aufbewahrung von essbaren Pflanzenteilen, wobei die Wände des Lebensmittelbeutels eines Vliesstoff umfassen, der aus Multikomponentenfilamenten besteht, die mindestens teilweise in Elementarfilamente aufgespalten sind, wobei mindestens ein Teil des Vliesstoffes perforiert ist.

2. Lebensmittelbeutel gemäß Anspruch 1, wobei die Multikomponentenfilamente durch Fluidstrahlbehandlung aufgespalten sind.

3. Lebensmittelbeutel gemäß mindestens einem der vorhergehenden Ansprüche, wobei der Vliesstoff ein Flächengewicht von 50 bis 110 g/m², bevorzugt 60 bis 90 g/m², aufweist.

4. Lebensmittelbeutel gemäß mindestens einem der vorhergehenden Ansprüche, wobei die Elementarfilamente einen Titer von 0,02 bis 0,5 dtex, bevorzugt von 0,03 bis 0,3 dtex, haben.

5. Lebensmittelbeutel gemäß mindestens einem der vorhergehenden Ansprüche, wobei die Multikomponentenfilamente eine kuchenförmige Struktur haben (PIE-Struktur).

6. Lebensmittelbeutel gemäß Anspruch 5, wobei die Multikomponentenfilamente 16 bis 32 Elementarfilamente aufweisen.

7. Lebensmittelbeutel gemäß Anspruch 5 oder 6, wobei die Bikomponentenfilamente alternierende Elementarfilamente aus Polyamid und Polyester aufweisen.

8. Lebensmittelbeutel gemäß mindestens einem der vorhergehenden Ansprüche, wobei die Wände des Lebensmittelbeutels mindestens zwei Abschnitte aufweisen, wobei der erste Abschnitt perforiert ist und der zweite Abschnitt nicht perforiert ist.

9. Lebensmittelbeutel gemäß mindestens einem der vorhergehenden Ansprüche, der mindestens ein essbares Pflanzenteil enthält.

10. Lebensmittelbeutel gemäß mindestens einem der vorhergehenden Ansprüche, wobei die essbaren Pflanzenteile ausgewählt sind aus Blüten, Früchten, Stämmen, Blättern, Wurzeln und Samen.

11. Verwendung eines Lebensmittelbeutels gemäß mindestens einem der vorhergehenden Ansprüche zur Aufbewahrung von essbaren Pflanzenteilen.

12. Verwendung gemäß Anspruch 11, wobei die Gemüse für mindestens 12 Stunden und/oder bei einer Temperatur zwischen 1°C und 30°C aufbewahrt werden.

13. Verfahren zur Aufbewahrung von essbaren Pflanzenteilen, umfassend die Schritte
a) Bereitstellen eines Lebensmittelbeutels gemäß einem der vorhergehenden Ansprüche,
b) Einbringen der essbaren Pflanzenteile in den Lebensmittelbeutel, und
c) Aufbewahren des Lebensmittelbeutels mit den enthaltenen essbaren Pflanzenteile bei einer Temperatur zwischen 1°C und 30°C für mindestens zwölf Stunden.

## Revendications

1. Sac alimentaire destiné à stocker des végétaux, les parois du sac alimentaire comprenant un non-tissé qui consiste en des filaments multicomposants, qui sont au moins partiellement séparés en filaments élémentaires, au moins une partie du non-tissé étant perforée.

2. Sac alimentaire selon la revendication 1, dans lequel les filaments multicomposants sont séparés par un traitement par jet de fluide.

3. Sac alimentaire selon au moins une des revendications précédentes, dans lequel le non-tissé a une masse surfacique de 50 à 110 g/m², de préférence de 60 à 90 g/m².

4. Sac alimentaire selon au moins une des revendications précédentes, dans lequel les filaments élémentaires ont un titre de 0,02 à 0,5 dtex, de préférence de 0,03 à 0,3 dtex.

5. Sac alimentaire selon au moins une des revendications précédentes, dans lequel les filaments multicomposants ont une structure en forme de tarte (structure triangulaire).

6. Sac alimentaire selon la revendication 5, dans lequel les filaments multicomposants comprennent 16 à 32 filaments élémentaires.

7. Sac alimentaire selon la revendication 5 ou 6, dans lequel les filaments bicomposants comprennent des filaments élémentaires alternés à base de polyamide et de polyester.

8. Sac alimentaire selon au moins une des revendications précédentes, les parois du sac alimentaire comprenant au moins deux parties, une première partie étant perforée, une deuxième partie n'étant pas perforée.

9. Sac alimentaire selon au moins une des revendications précédentes, qui contient au moins un végétal.

10. Sac alimentaire selon au moins une des revendications précédentes, dans lequel le végétal est choisi parmi les fleurs, les fruits, les tiges, les feuilles, les racines et les graines.

11. Utilisation d'un sac alimentaire selon au moins une des revendications précédentes pour la conservation de végétaux.

12. Utilisation selon la revendication 11, dans laquelle les végétaux sont conservés pendant au moins 12 heures et/ou à une température comprise entre 1 °C et 30 °C.

13. Procédé de conservation de végétaux, comprenant les étapes suivantes :
a) obtention d'un sac alimentaire selon l'une quelconque des revendications précédentes,
b) emballage des végétaux dans le sac alimentaire, et
c) conservation du sac alimentaire avec les végétaux emballés à une température comprise entre 1 °C et 30 °C pendant au moins 12 heures.
